# EUROPÄISCHE PATENTSCHRIFT

(11) **EP 1 532 566 B1**
(45) Veröffentlichungstag und Bekanntmachung des Hinweises auf die Patenterteilung: **14.12.2011**
(21) Anmeldenummer: 03792172.3
(22) Anmeldetag: 02.07.2003
(51) Int. Cl.: G06Q 10/00, B29D 11/00

(54) **VERFAHREN UND VORRICHTUNG ZUM HERSTELLEN VON BRILLENGLÄSERN AUS KUNSTSTOFF**
METHOD AND DEVICE FOR PRODUCING PLASTIC SPECTACLE LENSES
PROCEDE ET DISPOSITIF DE PRODUCTION DE VERRES DE LUNETTES EN PLASTIQUE

(30) Priorität: 07.08.2002 DE 10236713
(43) Veröffentlichungstag der Anmeldung: 25.05.2005
(73) Patentinhaber: Carl Zeiss Vision GmbH, 73430 Aalen (DE)
(72) Erfinder: HAIDL, Markus, 73431 Aalen (DE); MERTIN, Michael, 73434 Aalen (DE); ZAISER, Michael, 73560 Böbingen (DE)
(74) Vertreter: Witte, Weller & Partner
(86) Internationale Anmeldenummer: PCT/EP2003/007075
(87) Internationale Veröffentlichungsnummer: WO 2004/019243

(56) Entgegenhaltungen:
- EP-A- 0 092 364
- EP-A- 0 299 690
- EP-A- 0 576 268

## Beschreibung

Die Erfindung betrifft ein Verfahren zum Herstellen von Brillengläsern aus Kunststoff, bei dem die Brillengläser durch Bearbeiten von Kunststoff-Rohlingen in Abhängigkeit von die Oberfläche des fertigen Brillenglases sowie Parameter des Bearbeitungsprozesses wiedergebenden Daten bearbeitet werden, gemäß Anspruch 1.

Die Erfindung betrifft ferner eine Vorrichtung zum Herstellen von Brillengläsern aus Kunststoff, mit einer Bearbeitungsvorrichtung für Kunststoff-Rohlinge und mit einem Rechner zum Steuern der Bearbeitungsvorrichtung in Abhängigkeit von die Oberfläche des fertigen Brillenglases sowie Parameter des Bearbeitungsprozesses wiedergebenden Daten, gemäß Anspruch 21.

Verfahren und Vorrichtungen der vorstehend genannten Art sind allgemein bekannt.

Bei modernen Brillengläsern, insbesondere Gleitsichtgläsem, unterscheidet man zwischen so genannten "nicht-individuellen" und "individuellen" Gläsern.

Nicht-individuelle Gleitsichtgläser sind solche, die konventionell standardisiert sind und im Falle ihrer Ausführung in Kunststoff in einem Gießprozess als Halbfabrikate hergestellt werden. Die Halbfabrikate werden dabei entweder bei einem der großen, eingeführten Brillenglashersteller gefertigt oder dezentral bei einem spezialisierten Großhändler, der nicht nur die Rohlinge herstellt, sondern auch die Flächenbearbeitung nach den Patientendaten durchführt, die ihm von Optikergeschäften zur Verfügung gestellt worden sind.

Üblicherweise werden die Halbfabrikate in einer Vielzahl unterschiedlicher Varianten hergestellt, die sich hinsichtlich der Grundkurve, der Addition, der Zuordnung rechts/links sowie in Bezug auf den Glastyp unterscheiden. Aus dem jeweils geeigneten Rohling wird danach das Brillenglas entsprechend den Anforderungen des einzelnen Patienten hergestellt.

Bei individuellen Gleitsichtgläsern werden im Vergleich zu einem nicht-individuellen Gleitsichtglas mehrere zusätzliche Parameter vom Augenarzt bzw. vom Optiker erfasst, die individuell in die Berechnung des Glases eingehen. Jedes individuelle Gleitsichtglas wird somit einzeln für einen speziellen Patienten berechnet und hergestellt.

Infolgedessen können individuelle Gleitsichtgläser zurzeit nur von wenigen Herstellern gefertigt werden, da neben der erforderlichen Fertigungstechnologie auch das Know-how zur Berechnung dieser individuellen Gleitsichtgläser vorhanden sein muss. Dies sind in der Regel nur die erfahrenen Brillenglashersteller.

Im Falle von nicht-individuellen Gleitsichtgläsern wird der Kunststoff-Rohling bzw. das Halbfabrikat üblicherweise auf der Frontfläche als Gleitsichtfläche bereits fertig bearbeitet und vorgegeben. Die patientenindividuelle Bearbeitung des Halbfabrikats findet demgegenüber nur auf der Rückfläche (der so genannten "Rezeptfläche") statt.

Bei individuellen Gleitsichtgläsern ist diese Vorgehensweise nicht möglich, weil in diesem Fall neben der patientenindividuell zu bearbeitenden Rückfläche auch die patientenindividuell ausgebildete Gleitsichtfläche auf der Frontfläche hergestellt werden muss.

Zusammengefasst bedeutet dies, dass bei individuellen Gleitsichtgläsern nach heutigem Stand der Technik eine Fertigung nur bei den großen Brillenglasherstellem möglich ist, was die Verbreitung dieser im Interesse der Patienten an sich wünschenswerten Form von Brillengläsern behindert. Dies liegt einmal daran, dass für die Herstellung derartiger individueller Gleitsichtgläser eine längere Zeit benötigt wird, dass Reklamationen komplizierter abzuwickeln sind und dass schließlich auch ein ausreichender Wettbewerb nicht immer gewährleistet werden kann.

Das Dokument EP 0 576 268 B1 beschreibt ein System zum Herstellen von Brillen. Das System besteht aus einer Mehrzahl von räumlich verteilten Verkaufsstationen, die über ein öffentliches Kommunikationsnetz mit einer zentralen Fertigungsstätte verbunden sind. In den Verkaufsstationen werden Daten der jeweiligen Brille sowie Daten der Brillengläser in ein Datenerfassungsgerät eingegeben und an die zentrale Fertigungsstätte übermittelt. In den Verkaufsstationen befinden sich keinerlei Fertigungseinrichtungen.

Das Dokument EP 0 299 690 A2 beschreibt ein System zum Bearbeiten von Verschreibungen für Kontaktlinsen. Das System besteht aus einer Mehrzahl von räumlich verteilten Terminals bei Augenärzten, z.B. Personal Computern oder Telefonen, die über ein öffentliches Kommunikationsnetz mit einem Zentralrechner verbunden sind. Auf diese Weise werden Bestellungen abgewickelt, Verschreibungen gespeichert, Patientenakten verwaltet usw. Auch hier findet im Bereich der Terminals keine Fertigung statt.

Ein ähnliches System für den Vertrieb von Brillen und Brillengläsern ist im Dokument US 2001/0042028 A1 beschrieben, wobei zwischen bereits registrierten und noch nicht registrierten Patienten differenziert wird.

Das Dokument EP 0 092 364 A1 beschreibt eine Vorrichtung zur Randbearbeitung eines Brillenglases, damit dieses in eine vorgegebene, nicht-kreisförmige Brillenfassung passt. Die Daten der Brillenfassung sind dabei in einem elektronischen Speicher abgelegt bzw. werden für eine neue Brillenfassung zunächst vermessen und dann in dem Speicher abgelegt. Diese Daten werden einer Randbearbeitungsvorrichtung zugeführt.

Der Erfindung liegt daher die Aufgabe zugrunde, ein Verfahren und eine Vorrichtung der eingangs genannten Art dahingehend weiterzubilden, dass sowdhl die Herstellung von konventionellen, nicht-individuellen Gleitsichtgläsern wie insbesondere auch die Herstellung von individuellen Gleitsichtgläsern nicht nur bei einigen wenigen Brillenglasherstellem möglich ist, sondern auch dezentral bei Großhandelsbetrieben, Großlabors und dergleichen erfolgen kann, wie sie heutzutage in vielen Märkten tätig sind.

Diese Aufgabe wird bei einem Verfahren gemäß Anspruch 1 und bei einer Vorrichtung gemäß Anspruch 21 gelöst

Die der Erfindung zugrunde liegende Aufgabe wird auf diese Weise vollkommen gelöst.

Erfindungsgemäß wird nämlich die Bearbeitung von konventionellen, nicht-individuellen Gleitsichtgläsern allein mit Mitteln der jeweiligen dezentralen Station ermöglicht, in der die dafür erforderlichen Datensätze für die jeweilige Oberflächenform und die erforderlichen Bearbeitungsparameter abgespeichert sind, so dass für die Herstellung in den dezentralen Stationen unmittelbar auf diese Datensätze zurückgegriffen werden kann. Wenn hingegen ein individuelles Gleitsichtglas hergestellt werden soll, kann auf die Berechnungskapazität der Zentralstation zurückgegriffen werden, die somit nicht in jeder der dezentralen Stationen vorgehalten werden muss.

Die Erfindung ermöglicht es daher erstmals, die Kompetenz zur Herstellung individueller Gleitsichtgläser auf eine dezentrale Ebene mit vielen, in einem bestimmten Markt parallel tätigen Großhändlern bzw. Großlabors zu verlagern, so dass die Bearbeitungszeiten insgesamt verkürzt werden und ein wirksamer Wettbewerb stattfindet.

Bei bevorzugten Ausführungsformen des erfindungsgemäßen Verfahrens werden die Kunststoff-Rohlinge in an sich bekannter Weise zunächst gegossen und dann bearbeitet. Dies erfolgt vorzugsweise durch Drehen, Schleifen, Fräsen oder weitere bekannte Bearbeitungsverfahren.

Wie bereits erwähnt wurde, kann je nach Art des herzustellenden Glases beim Gießen bereits eine der Oberflächen des Kunststoff-Rohlings fertig hergestellt und nur die andere Oberfläche bearbeitet werden, während andererseits auch beim Gießen keine der Oberflächen des Kunststoff-Rohlings fertig hergestellt und dann beide Oberflächen bearbeitet werden.

Im erstgenannten Fall wird vorzugsweise die eine Oberfläche als vorgefertigte Gleitsichtfläche ausgebildet und die andere Oberfläche als Rezeptfläche bearbeitet. Alternativ kann aber auch die eine Oberfläche in grober Stufung als sphärische oder torische Fläche ausgebildet und die andere Oberfläche als kombinierte Gleitsicht- und Rezeptfläche bearbeitet werden. Bevorzugt befindet sich in beiden Fällen die andere Fläche auf der Rückseite des Brillenglases.

Im letztgenannten Fall ist es sogar möglich, die Kunststoff-Rohlinge außerhalb der dezentralen Station als unbearbeitete Rohteile, so genannte "Hockey Pucks", herzustellen und dann der dezentralen Station zuzuführen. Dies führt zu erheblichen Kosteneinsparungen.

Weiterhin ist bevorzugt, wenn in ebenfalls an sich bekannter Weise die Kunststoff-Rohlinge zunächst spanabhebend bearbeitet, dann poliert und schließlich markiert werden.

Bei bevorzugten Weiterbildungen des erfindungsgemäßen Verfahrens werden die ersten bzw. zweiten Daten in Abhängigkeit von Eingangssignalen berechnet bzw. ausgelesen, die in der dezentralen Station eingegeben, insbesondere manuell eingegeben werden.

Diese Maßnahmen haben den Vorteil, dass eine ankommende Bestellung für ein bestimmtes Brillenglas in der dezentralen Station sogleich z.B. über eine Tastatur in einen Rechner eingegeben werden kann und dann aus diesen eingegebenen Signalen unmittelbar die erforderlichen Daten berechnet bzw. ausgelesen werden. Auch dies trägt zur Verkürzung der Gesamt-Bearbeitungszeit eines derartigen Auftrages bei.

Bei Varianten dieses Ausführungsbeispiels ist bevorzugt, wenn in der dezentralen Station nach Eingabe der Eingangssignale zunächst ein Werkstückträger ausgewählt, der Werkstückträger mit einem zu bearbeitenden Kunststoff-Rohling bestückt, und der Werkstückträger alsdann einer Bearbeitungsvorrichtung zugeführt wird.

Dies gilt insbesondere dann, wenn eine auf dem Werkstückträger befindliche Markierung ausgelesen und mit den Eingangssignalen zu einem Datensatz verknüpft wird.

Diese Maßnahme hat den Vorteil, dass Aufträge in reproduzierbarer Weise gesteuert und die Daten des Auftrages, einschließlich der Bearbeitung, zu Dokumentationszwecken abgespeichert werden können.

Hierzu ist weiter vorzugsweise vorgesehen, dass dem Datensatz die in Abhängigkeit von den Eingangssignalen aus dem Speicher ausgelesenen zweiten Daten hinzugefügt werden, wobei insbesondere der Datensatz der Zentralstation übermittelt und dort abgespeichert wird.

Auf diese Weise entsteht ein komplett geregelter und dokumentierter Bearbeitungsvorgang, der eine hohe Bearbeitungsqualität bei niedrigem Ausschuss gewährleistet.

Besonders bevorzugt sind Ausführungsbeispiele der Erfindung, bei denen die Zentralstation einen weiteren Speicher aufweist, in dem Updates für die zweiten Daten abgespeichert sind, wobei vor dem Auslesen von zweiten Daten aus dem Speicher durch Verbindung mit dem weiteren Speicher die zweiten Daten mit den Updates verglichen werden. Hierbei ist besonders bevorzugt, dann, wenn die zweiten Daten nicht mit den Updates übereinstimmen, die zweiten Daten im Speicher durch die Updates zu ersetzen.

Diese Maßnahme hat den Vorteil, dass auch bei der Herstellung von konventionellen, nicht-individuellen Gleitsichtgläsern stets auf die neuesten Datensätze der Hersteller zurückgegriffen werden kann, indem bei jedem Neuauftrag oder entsprechend einem sonstigen Raster in der Zentralstation abgefragt wird, ob die in der dezentralen Station vorhandenen Datensätze noch aktuell sind oder nicht. Durch schnelles elektronisches Update wird in diesem Fall gewährleistet, dass dem Endnutzer und damit auch dem Patienten immer die neuesten Daten zur Verfügung stehen. Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Die einzige Figur zeigt ein äußerst schematisiertes Blockschaltbild zur Veranschaulichung eines Ausführungsbeispiels des erfindungsgemäßen Verfahrens bzw. einer erfindungsgemäßen Vorrichtung.

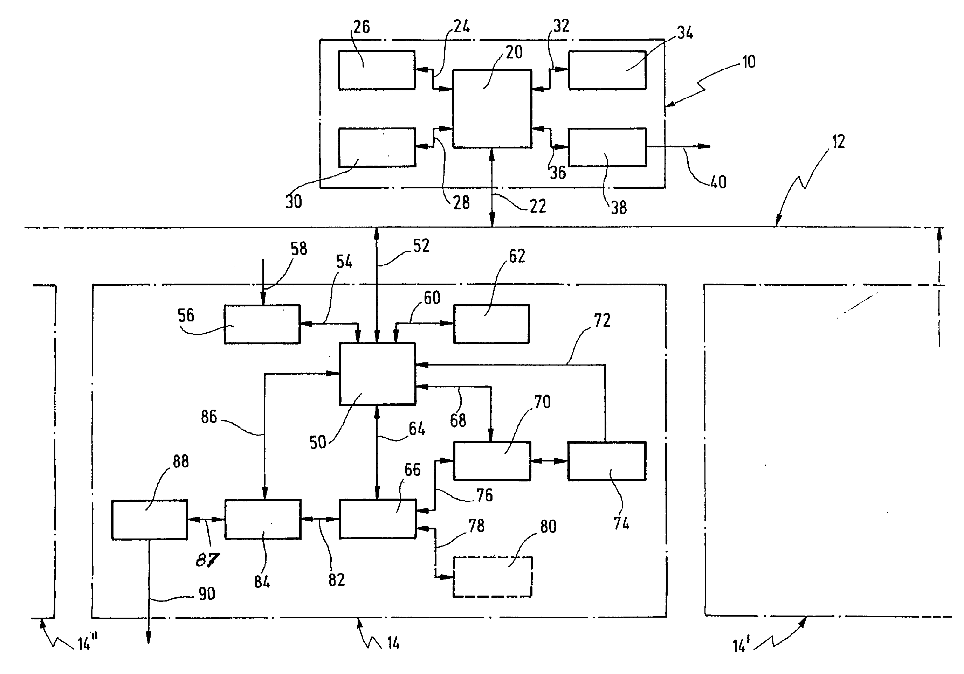

In Fig. 1 bezeichnet 10 insgesamt eine Zentralstation, mit der die Funktion eines Servers ausgeübt wird. Die Zentralstation 10 ist an ein Leitungsnetz 12 angeschlossen. Das Leitungsnetz 12 kann ein herkömmliches Leitungsnetz sein, wie es zur Übertragung von Daten oder sonstigen Signalen verwendet werden kann, als Leitungsnetz 12 kommt aber auch das Internet in Betracht.

An das Leitungsnetz 12 sind ferner dezentrale Stationen mit der Funktion eines Clients angeschlossen, von denen in der Figur eine Station 14 im einzelnen dargestellt ist und weitere Stationen 14', 14" schematisch angedeutet sind. Es versteht sich, daß die Zahl der dezentralen Stationen 14, 14', 14'' in keiner Weise beschränkt ist, auch nicht in ihrer räumlichen Verteilung.

Die Zentralstation 10 enthält einen ersten Rechner 20. Dieser ist mit einer Leitung 22 an das Leitungsnetz 12 angeschlossen. Wenn im folgenden von "Leitung" die Rede ist, so ist damit jede Art von Wechselwirkung zwischen zwei Baugruppen oder Einrichtungen zu verstehen, die der Übertragung von Daten oder auch der Übergabe von Sachen dient. Es versteht sich ferner, daß das nachstehend geschilderte Blockschaltbild gemäß der Figur in der dargestellten Konfiguration nur als Beispiel zu verstehen ist und daß viele der nachstehend geschilderten Funktionen auch als Teil einer Programmsteuerung dargestellt werden können, ohne an bestimmte Vorrichtungskonfigurationen gebunden zu sein.

Der erste Rechner 20 ist weiterhin über eine Leitung 24 mit einer Rechenstufe 26 verbunden, in der Datensätze für individuelle Gleitsichtgläser nach patientenindividuellen Vorgaben berechnet werden. Diese Datensätze umfassen die entsprechende Oberflächengestaltung für die beiden Flächen des Brillenglases ebenso wie sich daraus ergebende Prozeßparameter, die bei der Bearbeitung eines Kunststoff-Rohlings zum Erzielen der berechneten Flächen benötigt werden. Insoweit ist unter dem Begriff "Daten" jedwede Kombination von Informationen zu verstehen, die zur Herstellung einer bestimmten Oberfläche eines Brillenglases benötigt wird.

Über eine Leitung 28 ist weiterhin ein erster Speicher 30 an den ersten Rechner 20 angeschlossen. Der erste Speicher 30 enthält Updates für nicht-individuelle Gleitsichtgläser, wie weiter unten noch erläutert werden wird.

Eine Leitung 32 verbindet den ersten Rechner 20 mit einem zweiten Speicher 34, in dem auftragsbezogene Daten abgespeichert und damit dokumentiert werden.

Schließlich führt eine Leitung 36 vom ersten Rechner 20 zu einer Rechenstufe 38, die über eine entsprechende Textverarbeitung für die Korrespondenz und das Rechnungswesen zuständig ist, wie mit einem nach außen weisenden Pfeil 40 angedeutet.

Die dezentrale Station 14 enthält einen zweiten Rechner 50, der über eine Leitung 52 in der bereits erwähnten Weise an das Leitungsnetz 12 angeschlossen ist. Eine weitere Leitung 54 führt vom zweiten Rechner 50 zu einem Terminal 56, das beispielsweise über eine Tastatur 58, eine Maus, eine Datenleitung oder dgl. ansteuerbar ist. Die Funktionen des Terminals 56 können auch in den zweiten Rechner 50 integriert sein. Das Terminal 56 dient zur Eingabe der patientenspezifischen Daten, die für die Herstellung eines gewünschten Brillenglases erforderlich sind.

Eine Leitung 60 verbindet den zweiten Rechner 50 mit einem dritten Speicher 62, in dem Daten für die Bestimmung von Flächen- und Prozeßparametern bei nicht-individuellen Gleitsichtgläsern abgespeichert sind.

Mittels einer Leitung 64 ist der zweite Rechner 50 an einen Werkstückträger 66 angeschlossen. Ferner führt eine Leitung 68 vom zweiten Rechner 50 zu einer Gießmaschine 70, in der die Kunststoff-Rohlinge abgegossen werden. Hierzu können aus einem über eine Leitung 72 vom zweiten Rechner 50 gesteuerten Formschalenlager 74 die erforderlichen formgebenden Elemente für die Gießmaschine 70 beigebracht werden. Die in der Gießmaschine 70 hergestellten Kunststoff-Rohlinge werden über eine Leitung 76 dem Werkstückträger 66 zugeführt.

Anstelle des vorstehend beschriebenen Gießvorganges mittels einer Gießmaschine 70 kann die dezentrale Station 14 auch extern vorgefertigte Rohlinge in Form sog. "Hockey Pucks" einsetzen, die in einem entsprechenden Lager 80 vorgehalten werden und über eine Leitung 78 dem Werkstückträger 66 zuführbar sind.

Die Werkstückträger 66 werden über eine Leitung 82 einer Bearbeitungsvorrichtung 84 zugeführt, die ihrerseits über eine Leitung 86 vom zweiten Rechner 50 steuerbar ist. Dort werden die Kunststoff-Rohlinge durch Drehen, Schleifen, Fräsen und dgl. bearbeitet, vorzugsweise auch poliert und schließlich markiert.

Die fertigen Kunststoff-Brillengläser verlassen dann die Bearbeitungsvorrichtung 84 über eine Leitung 87 und gelangen in eine Versandeinheit 88, von wo sie ausgeliefert werden, wie mit einem nach außen weisenden Pfeil 90 angedeutet ist.

Es sollen nun zwei Beispiele für eine Vorgehensweise bei der Herstellung eines Kunststoff-Brillenglases erläutert werden:
Einem bestimmten Auftrag liegen patientenspezifische Daten zugrunde, die vorzugsweise manuell über die Tastatur 58 in das Terminal 56 eingegeben werden. Im zweiten Rechner 50 wird nun festgestellt, ob es sich bei dem gewünschten Brillenglas um ein individuelles oder ein nicht-individuelles Glas handelt.

Im erstgenannten Fall wird über das Leitungsnetz 12 eine Verbindung zur Zentralstation 10 hergestellt. In der Rechenstufe 26 werden nun die individuellen Daten für den zu bearbeitenden Auftrag berechnet, d.h. die zu erzeugenden Flächen des Brillenglases, einschließlich der erforderlichen Daten für die Prozeßparameter des jeweiligen Bearbeitungsvorganges. Diese Daten werden über das Leitungsnetz 12 an die dezentrale Station 14 übermittelt. Gleichzeitig werden die so ermittelten Daten im zweiten Speicher 34 archiviert.

Der zweite Rechner 50 setzt nun mit den soeben übermittelten Daten den Bearbeitungsvorgang in Gang. Hierzu wird entweder mittels der Gießmaschine 70 und des Formschalenlagers 74 ein Kunststoff-Rohling in der dezentralen Station 14 abgegossen oder es wird, da ohnehin beide Flächen des Kunststoff-Rohlings zu bearbeiten sind, aus dem Puck-Lager 80 ein völlig unbearbeiteter Rohling entnommen.

Mit dem auf die eine oder die andere Weise bereitgestellten Rohling wird nun der Werkstückträger 66 bestückt. Der Werkstückträger 66 trägt eine Markierung, die ausgelesen und dem zweiten Rechner 50 übermittelt wird, damit der jeweilige Herstellungsvorgang auch insoweit dokumentiert werden kann. Der Werkstückträger 66 gelangt nun mit dem Rohling in die Bearbeitungsvorrichtung 84, wo in der eingangs beschriebenen Weise das individuelle Gleitsichtglas durch Bearbeiten der Frontfläche und der Rückfläche hergestellt wird. Vorzugsweise wird das Glas dann an der Front- oder der Rückfläche poliert und schließlich zur späteren Orientierung des Glases auch signiert.

Eine Bearbeitung auf nur einer der beiden Flächen, vorzugsweise der Rückfläche, ist ebenfalls möglich. Weiterhin ist es bei individuellen Gleitsichtgläsern auch möglich, die Gleitsichtfläche zusammen mit der Rezeptfläche auf derselben Seite, vorzugsweise der Rückseite des Brillenglases, vorzusehen. In diesem Falle würde man bei der Bearbeitung von einem Halbfabrikat ausgehen, bei dem die nicht zu bearbeitende Seite bereits fertig ist. Hierzu würde im Normalfall eine sphärische oder eine torische Fläche, jeweils in groben Stufungen sortiert, ausreichen.

Nach dem Verlassen der Bearbeitungsvorrichtung 84 wird das fertig bearbeitete Brillenglas vorzugsweise noch an seiner Oberfläche veredelt. Zu diesem Zweck kann wahlweise eine Hartschicht, eine Antireflexschicht und eine hydrophobe Schicht aufgebracht werden. Die hierzu erforderlichen Beschichtungseinrichtungen können gleichfalls mit dem zweiten Rechner 50 verbunden sein. Ein nicht-vernetzter Betrieb ist jedoch gleichfalls möglich.

Das auf diese Weise hergestellte Brillenglas wird nun dem Versand 88 zugeleitet.

Die während des Herstellungsprozesses gesammelten Daten werden vom zweiten Rechner 50 über das Leitungsnetz 12 der Zentralstation 10 übermittelt, wo diese Daten ebenfalls im zweiten Speicher 34 archiviert sowie in der Rechenstufe 38 für die weitere Korrespondenz mit dem Kunden verarbeitet werden.

Im Falle nicht-individueller Gläser läuft der Prozeß insoweit etwas anders ab, als der zweite Rechner 50 die für die Bearbeitung erforderlichen Daten unmittelbar aus dem dritten Speicher 62 entnimmt, der sich ebenfalls in der dezentralen Station 14 befindet. Vorzugsweise wird vor der Übernahme der Bearbeitungsdaten aus dem dritten Speicher 62 noch ein Update durchgeführt, indem der zweite Rechner 50 über das Leitungsnetz 12 mit der Zentralstation 10 Verbindung aufnimmt und dort im ersten Speicher 30 prüft, ob die aus dem dritten Speicher 62 ausgelesenen Daten für das jeweilige nicht-individuelle Gleitsichtglas dem neuesten Stand entsprechen. Führt ein Vergleich zu dem Ergebnis, daß im dritten Speicher 62 noch veraltete Daten abgespeichert waren, so werden diese Daten zunächst durch Austausch mit dem ersten Speicher 30 upgedatet und die upgedateten Daten dann für den nachfolgenden Bearbeitungsvorgang eingesetzt.

Die Bearbeitung findet dann in der gleichen Weise statt, wie weiter vorne für den Fall von individuellen Gleitsichtgläsern beschrieben wurde.

## Patentansprüche

1. Verfahren zum Herstellen von Brillengläsern aus Kunststoff, bei dem die Brillengläser durch Bearbeiten von Kunststoff-Rohlingen in Abhängigkeit von die Oberfläche des fertigen Brillenglases sowie Parameter des Bearbeitungsprozesses wiedergebenden Daten bearbeitet werden, **dadurch gekennzeichnet, dass** die Kunststoff-Rohlinge in einer von mehreren dezentralen Stationen (14, 14', 14"), das heißt in einem bestimmten Markt parallel tätigen Großhändlern bzw. Großlabors, bearbeitet werden, dass die Daten wahlweise als erste Daten für individuelle Brillengläser in einer Zentralstation (10) berechnet und der dezentralen Station (14, 14', 14") übermittelt werden oder als zweite Daten für nicht-individuelle Brillengläser aus einem Speicher (62) in der dezentralen Station (14, 14', 14") ausgelesen werden.

2. Verfahren nach Anspruch 1, **dadurch gekennzeichnet, dass** die Kunststoff-Rohlinge zunächst gegossen und dann bearbeitet werden.

3. Verfahren nach Anspruch 2, **dadurch gekennzeichnet, dass** die Kunststoff-Rohlinge durch Drehen bearbeitet werden.

4. Verfahren nach Anspruch 2, **dadurch gekennzeichnet, dass** die Kunststoff-Rohlinge durch Schleifen bearbeitet werden.

5. Verfahren nach Anspruch 2, **dadurch gekennzeichnet, dass** die Kunststoff-Rohlinge durch Fräsen bearbeitet werden.

6. Verfahren nach einem oder mehreren der Ansprüche 2 bis 5, **dadurch gekennzeichnet, dass** beim Gießen eine der Oberflächen des Kunststoff-Rohlings fertig hergestellt und nur die andere Oberfläche bearbeitet wird.

7. Verfahren nach Anspruch 6, **dadurch gekennzeichnet, dass** die eine Oberfläche als vorgefertigte Gleitsichtfläche ausgebildet und die andere Oberfläche als Rezeptfläche bearbeitet wird.

8. Verfahren nach Anspruch 6, **dadurch gekennzeichnet, dass** die eine Oberfläche als sphärische oder torische Fläche ausgebildet und die andere Oberfläche als kombinierte Gleitsicht- und Rezeptfläche bearbeitet wird.

9. Verfahren nach Anspruch 7 oder 8, **dadurch gekennzeichnet, dass** sich die andere Fläche auf der Rückseite des Brillenglases befindet.

10. Verfahren nach einem oder mehreren der Ansprüche 2 bis 5, **dadurch gekennzeichnet, dass** beim Gießen keine der Oberflächen des Kunststoff-Rohlings fertig hergestellt und beide Oberflächen bearbeitet werden.

11. Verfahren nach Anspruch 10, **dadurch gekennzeichnet, dass** die Kunststoff-Rohlinge außerhalb der dezentralen Station (14, 14', 14") als unbearbeitete Rohteile hergestellt und dann der dezentralen Station (14, 14', 14") zugeführt werden.

12. Verfahren nach einem oder mehreren der Ansprüche 1 bis 11, **dadurch gekennzeichnet, dass** die Kunststoff-Rohlinge zunächst spanabhebend bearbeitet, dann poliert und schließlich markiert werden.

13. Verfahren nach einem oder mehreren der Ansprüche 1 bis 12, **dadurch gekennzeichnet, dass** die ersten bzw. zweiten Daten in Abhängigkeit von Eingangssignalen berechnet bzw. ausgelesen werden, die in der dezentralen Station (14, 14', 14") eingegeben werden.

14. Verfahren nach Anspruch 13, **dadurch gekennzeichnet, dass** die Eingangssignale manuell eingegeben werden.

15. Verfahren nach Anspruch 13 oder 14, **dadurch gekennzeichnet, dass** in der dezentralen Station (14, 14', 14") nach Eingabe der Eingangssignale zunächst ein Werkstückträger (66) ausgewählt, der Werkstückträger (66) mit einem zu bearbeitenden Kunststoff-Rohling bestückt, und der Werkstückträger alsdann einer Bearbeitungsvorrichtung (84) zugeführt wird.

16. Verfahren nach Anspruch 15, **dadurch gekennzeichnet, dass** eine auf dem Werkstückträger (66) befindliche Markierung ausgelesen und mit den Eingangssignalen zu einem Datensatz verknüpft wird.

17. Verfahren nach Anspruch 16, **dadurch gekennzeichnet, dass** dem Datensatz die in Abhängigkeit von den Eingangssignalen aus dem Speicher (62) ausgelesenen zweiten Daten hinzugefügt werden.

18. Verfahren nach Anspruch 16 oder 17, **dadurch gekennzeichnet, dass** der Datensatz der Zentralstation (10) übermittelt und dort abgespeichert wird.

19. Verfahren nach einem oder mehreren der Ansprüche 1 bis 18, **dadurch gekennzeichnet, dass** die Zentralstation (10) einen weiteren Speicher (30) aufweist, in dem Updates für die zweiten Daten abgespeichert sind, und dass vor dem Auslesen von zweiten Daten aus dem Speicher (62) durch Verbindung mit dem weiteren Speicher (30) die zweiten Daten mit den Updates verglichen werden.

20. Verfahren nach Anspruch 19, **dadurch gekennzeichnet, dass** dann, wenn die zweiten Daten nicht mit den Updates übereinstimmen, die zweiten Daten in dem Speicher (62) durch die Updates ersetzt werden.

21. Vorrichtung zum Herstellen von Brillengläsern aus Kunststoff, mit einer Bearbeitungsvorrichtung (84) für Kunststoff-Rohlinge und mit einem Rechner (50) zum Steuern der Bearbeitungsvorrichtung (84) in Abhängigkeit von die Oberfläche des fertigen Brillenglases sowie Parameter des Bearbeitungsprozesses wiedergebenden Daten, **dadurch gekennzeichnet, dass** eine Zentralstation (10) sowie eine Mehrzahl von mit der Zentralstation (10) über ein Leitungsnetz (12) verbundenen dezentralen Stationen (14), 14', 14"), das heißt in einem bestimmten Markt parallel tätige Großhändler bzw. Großlabors, vorgesehen sind, wobei die Zentralstation (10) eine Rechenstufe (26) zum Berechnen von ersten Daten für individuelle Brillengläser enthält und in den dezentralen Stationen (14, 14', 14") Speicher (62) für zweite Daten für nicht-individuelle Brillengläser vorhanden sind und der Rechner (50) Mittel aufweist, um die Bearbeitungsvorrichtung (84) wahlweise in Abhängigkeit von den ersten Daten oder den zweiten Daten zu steuern.

## Claims

1. A method for making plastic material spectacle lenses, wherein said spectacle lenses are worked by working plastic material blanks as a function of data representing the surface of said spectacle lens in a finished state as well as work process parameters, **characterized in that** said plastic material blanks are worked in one of a plurality of de-centralized units (14, 14', 14"), i.e. wholesalers and large laboratories, respectively, acting on the same market, **in that** selectively for individualized spectacle lenses said data are computed in a central unit (10) as first data and are transmitted to said decentralized unit (14, 14', 14") or for non-individualized spectacle lenses said data are read out of a memory (62) in said decentralized unit (14, 14', 14") as second data.

2. The method of claim 1, **characterized in that** said plastic material blanks are first molded and then worked.

3. The method of claim 2, **characterized in that** said plastic material blanks are worked by lathing.

4. The method of claim 2, **characterized in that** said plastic material blanks are worked by grinding.

5. The method of claim 2, **characterized in that** said plastic material blanks are worked by milling.

6. The method of one or more of claims 2 to 5, **characterized in that** one of said surfaces of said plastic material blank is made as a finished surface during molding, whereas only the other of said surfaces is worked.

7. The method of claim 6, **characterized in that** said one surface is configured as a prefabricated progressive power lens and said other surface is worked as a prescription surface.

8. The method of claim 6, **characterized in that** said one surface is configured as a spheric or toric surface, and said other surface is worked as a combined progressive power and prescription surface.

9. The method of claim 7 or 8, **characterized in that** said other surface is on the rear side of the spectacle lens.

10. The method of one or more of claims 2 to 5, **characterized in that** none of said surfaces is made as a finished surface during molding and both surfaces are worked.

11. The method of claim 10, **characterized in that** said plastic material blanks are manufactured outside said de-centralized unit (14, 14', 14") as non-worked raw parts and are then fed to said de-centralized unit (14, 14', 14").

12. The method of one or more of claims 1 to 11, **characterized in that** said plastic material blanks are first worked by chip-cutting, are then polished and are finally marked.

13. The method of one or more of claims 1 to 12, **characterized in that** said first and said second data, respectively, are computed and read-out, respectively, as a function of input signals which are entered in said de-centralized unit (14, 14', 14").

14. The method of claim 13, **characterized in that** said input signals are entered manually.

15. The method of claim 13 or 14, **characterized in that** after said input signals have been entered, a work piece carrier (66) is first selected within said decentralized unit (14, 14', 14"), said work piece carrier (66) being provided with a plastic material blank to be worked, and said work piece carrier (66) being then fed to a working installation (84).

16. The method of claim 15, **characterized in that** a marking on said work piece carrier (66) is read out and is then linked with said input signals to a set of data.

17. The method of claim 16, **characterized in that** said second data read out from said memory (62) as a function of said input signals are added to said set of data.

18. The method of claim 16 or 17, **characterized in that** said set of data is transmitted to said central unit (10) and is stored therein.

19. The method of one or more of claims 1 to 18, **characterized in that** said central unit (10) has a further memory (30) in which updates for said second data are stored, and **in that** prior to reading-out said second data from said memory (62), said second data are compared with said updates by connection with the further memory (30).

20. The method of claim 19, **characterized in that** said second data in said memory (62) are replaced by said updates if said second data are not in accordance with said updates.

21. An apparatus for making plastic material spectacle lenses, comprising a working installation (84) for plastic material blanks and a computer (50) for controlling the working installation (84) as a function of data representing the surface of said spectacle lens in a finished state as well as work process parameters, **characterized in that** a central unit (10) and a plurality of de-centralized units (14, 14', 14"), i.e. wholesalers and large laboratories, respectively, acting on the same market, connected to said central unit by a line network are provided, wherein said central unit (10) has a computing stage (26) for computing first data for individualized spectacle lenses and in said de-centralized units (14, 14', 14") memories (62) for second data for non-individualized spectacle lenses (62) are present and said computer (50) has means for controlling said working installation (84) selectively as a function of said first or of said second data.

## Revendications

1. Procédé de production de verres de lunettes en matière plastique, dans lequel on usine des verres de lunettes par usinage d'ébauches en matière plastique en fonction de données reproduisant la surface du verre de lunettes terminé ainsi que des paramètres du processus d'usinage, **caractérisé en ce que** l'on usine les ébauches en matière plastique dans une de plusieurs stations décentralisées (14, 14', 14"), c'est-à-dire des grossistes ou des grands laboratoires actifs en parallèle dans un marché déterminé, **en ce que** l'on calcule les données comme premières données pour des verres de lunettes individuels dans une station centrale (10) et on les transmet à la station décentralisée (14, 14', 14") ou on lit les données comme deuxièmes données pour des verres de lunettes non individuels dans une mémoire (62) dans la station décentralisée (14, 14', 14").

2. Procédé selon la revendication 1, **caractérisé en ce que** l'on moule d'abord les ébauches en matière plastique et on les usine ensuite.

3. Procédé selon la revendication 2, **caractérisé en ce que** l'on usine les ébauches en matière plastique par tournage.

4. Procédé selon la revendication 2, **caractérisé en ce que** l'on usine les ébauches en matière plastique par rodage.

5. Procédé selon la revendication 2, **caractérisé en ce que** l'on usine les ébauches en matière plastique par fraisage.

6. Procédé selon une ou plusieurs des revendications 2 à 5, **caractérisé en ce que** l'on termine une des surfaces de l'ébauche en matière plastique lors du moulage et on usine uniquement l'autre surface.

7. Procédé selon la revendication 6, **caractérisé en ce que** l'on réalise la première surface sous la forme d'une face progressive préfabriquée et on usine l'autre surface comme face de prescription.

8. Procédé selon la revendication 6, **caractérisé en ce que** l'on réalise la première surface sous la forme d'une face sphérique ou torique et on usine l'autre surface comme face progressive et de prescription combinée.

9. Procédé selon la revendication 7 ou 8, **caractérisé en ce que** l'autre face se trouve sur le côté arrière du verre de lunettes.

10. Procédé selon une ou plusieurs des revendications 2 à 5, **caractérisé en ce que** l'on ne termine aucune des surfaces de l'ébauche en matière plastique lors du moulage et on usine les deux surfaces.

11. Procédé selon la revendication 10, **caractérisé en ce que** l'on fabrique les ébauches en matière plastique sous la forme de pièces non usinées à l'extérieur de la station décentralisée (14, 14', 14") et on les fournit ensuite à la station décentralisée (14, 14', 14").

12. Procédé selon une ou plusieurs des revendications 1 à 11, **caractérisé en ce que** l'on usine les ébauches en matière plastique d'abord par enlèvement de copeaux, puis on les polit et finalement on les marque.

13. Procédé selon une ou plusieurs des revendications 1 à 12, **caractérisé en ce que** l'on calcule ou on lit les premières ou les deuxièmes données en fonction de signaux d'entrée, qui sont introduits dans la station décentralisée (14, 14', 14").

14. Procédé selon la revendication 13, **caractérisé en ce que** l'on introduit les signaux d'entrée manuellement.

15. Procédé selon la revendication 13 ou 14, **caractérisé en ce que** l'on sélectionne d'abord un porte-pièce (66) dans la station décentralisée (14, 14', 14"), après l'introduction des signaux d'entrée, on monte sur le porte-pièce (66) une ébauche en matière plastique à usiner, et on envoie ensuite le porte-pièce à un dispositif d'usinage (84).

16. Procédé selon la revendication 15, **caractérisé en ce qu'**on lit un marquage se trouvant sur le porte-pièce (66) et on le lie aux signaux d'entrée en un ensemble de données.

17. Procédé selon la revendication 16, **caractérisé en ce que** l'on ajoute à l'ensemble de données les deuxièmes données lues dans la mémoire (62) en fonction des signaux d'entrée.

18. Procédé selon la revendication 16 ou 17, **caractérisé en ce que** l'on transmet l'ensemble de données à la station centrale (10) et on l'y mémorise.

19. Procédé selon une ou plusieurs des revendications 1 à 18, **caractérisé en ce que** la station centrale (10) présente une autre mémoire (30), dans laquelle sont mémorisées des mises à jour pour les deuxièmes données, et **en ce que**, avant de lire les deuxièmes données dans la mémoire (62), on compare les deuxièmes données avec les mises à jour par une liaison avec l'autre mémoire (30).

20. Procédé selon la revendication 19, **caractérisé en ce que**, lorsque les deuxièmes données ne coïncident pas avec les mises à jour, on remplace les deuxièmes données par les mises à jour dans la mémoire (62).

21. Dispositif de production de verres de lunettes en matière plastique, avec un dispositif d'usinage (84) pour des ébauches en matière plastique et avec un calculateur (50) pour commander le dispositif d'usinage (84) en fonction de données reproduisant la surface du verre de lunettes terminé ainsi que des paramètres du processus d'usinage, **caractérisé en ce qu'**il est prévu une station centrale (10) ainsi qu'une pluralité de stations décentralisées (14, 14', 14") reliées à la station centrale (10) par un réseau de conducteurs (12), c'est-à-dire de grossistes ou de grands laboratoires actifs en parallèle dans un marché déterminé, dans lequel la station centrale (10) comprend un étage de calcul (26) pour le calcul de premières données pour des verres de lunettes individuels, et des mémoires (62) pour des deuxièmes données pour des verres de lunettes non individuels sont présentes dans les stations décentralisées (14, 14', 14"), et le calculateur (50) présente des moyens destinés à commander le dispositif d'usinage (84) au choix en fonction des premières données ou des deuxièmes données.
